(19) Europäisches Patentamt
European Patent Office
Office européen des brevets

(11) **EP 3 732 458 B1**

(12) **EUROPÄISCHE PATENTSCHRIFT**

(45) Veröffentlichungstag und Bekanntmachung des Hinweises auf die Patenterteilung:
**21.06.2023  Patentblatt 2023/25**

(21) Anmeldenummer: **18830865.4**

(22) Anmeldetag: **28.12.2018**

(51) Internationale Patentklassifikation (IPC):
**G01M 15/02** (2006.01)    **G01M 7/00** (2006.01)
**G01M 13/025** (2019.01)   **G01L 3/16** (2006.01)
**G01M 13/022** (2019.01)

(52) Gemeinsame Patentklassifikation (CPC):
**G01M 15/02; G01L 3/16; G01M 7/00;
G01M 13/025;** G01M 13/022

(86) Internationale Anmeldenummer:
**PCT/EP2018/097062**

(87) Internationale Veröffentlichungsnummer:
**WO 2019/129835 (04.07.2019 Gazette 2019/27)**

(54) **PRÜFSTAND UND VERFAHREN ZUM DURCHFÜHREN EINES DYNAMISCHEN PRÜFLAUFS FÜR EINEN PRÜFAUFBAU**

TEST BENCH AND PROCEDURE FOR PERFORMING A DYNAMIC TEST

BANC D'ESSAI ET PROCÉDÉ POUR UN ESSAI DYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2017  AT 510862017**

(43) Veröffentlichungstag der Anmeldung:
**04.11.2020  Patentblatt 2020/45**

(73) Patentinhaber: **AVL List GmbH
8020 Graz (AT)**

(72) Erfinder:
• **VADAMALU, Raja Sangili
64287 Darmstadt (DE)**
• **BEIDL, Christian
8063 Eggersdorf (AT)**
• **BIER, Maximilian
64285 Darmstadt (DE)**

(74) Vertreter: **Patentanwälte Pinter & Weiss OG
Prinz-Eugen-Straße 70
1040 Wien (AT)**

(56) Entgegenhaltungen:
**JP-A- 2006 300 683    JP-A- 2007 163 164**

JP-A- 2017 122 642

• **CHRISTIAN MATTHEWS ET AL: "Chassis Dynamometer Torque Control System Design by Direct Inverse Compensation", 6TH BIENNIAL UKACC INTERNATIONAL CONTROL CONFERENCE (ICC'06), AT GLASGOW, 1. September 2006 (2006-09-01), XP055574291, Liverpool DOI: 10.13140/2.1.4961.8883**
• **MICHEL GEVERS ET AL: "The Local Polynomial Method for nonparametric system identification: Improvements and experimentation", DECISION AND CONTROL AND EUROPEAN CONTROL CONFERENCE (CDC-ECC), 2011 50TH IEEE CONFERENCE ON, IEEE, 12. Dezember 2011 (2011-12-12), Seiten 4302-4307, XP032122157, DOI: 10.1109/CDC.2011.6160311 ISBN: 978-1-61284-800-6**
• **Ward Christopher Patrick: "J-Spectral Factorisation for Automotive Powertrain Controls", , 1 June 2009 (2009-06-01), XP093012719, Liverpool, UK Retrieved from the Internet: URL:http://livrepository.liverpool.ac.uk/id/eprint/3061564 [retrieved on 2023-01-10]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die gegenständliche Erfindung betrifft einen Prüfstand und ein Verfahren zum Durchführen eines dynamischen Prüflaufs für einen Prüfaufbau auf einem Prüfstand, wobei der Prüfaufbau zumindest einen Drehmomentenerzeuger umfasst, der am Prüfstand mittels eines Koppelungselements mechanisch mit zumindest einer Drehmomentensenke verbunden wird, und wobei der Drehmomentenerzeuger, das Koppelungselement und die Drehmomentensenke mit das dynamische Verhalten charakterisierenden Systemparametern beschrieben werden, wobei der Prüfaufbau am Prüfstand dynamisch angeregt wird, indem dem Prüfaufbau ein dynamisches Eingangssignal aufgeschaltet wird und dabei Messwerte des Eingangssignals des Prüfaufbaus und eines sich ergebenden Ausgangssignals des Prüfaufbaus erfasst werden und aus dem erfassten Eingangssignal und Ausgangssignal mit einer nicht-parametrischen Identifikationsmethode ein Frequenzgang des dynamischen Verhaltens des Prüfaufbaus zwischen dem Ausgangssignal und dem Eingangssignal ermittelt wird.

Die Entwicklung von Antriebsaggregaten, wie beispielsweise Verbrennungsmotoren oder Elektromotoren, von Antriebssträngen mit solchen Antriebsaggregaten oder von Antriebsstrangkomponenten mit solchen Antriebsaggregaten finden Großteils auf Prüfständen statt. Ebenso findet in der Regel die Kalibrierung einer Steuerungsfunktion oder Regelungsfunktion eines Fahrzeugs, beispielsweise zur Erfüllung gesetzlicher Vorgaben, wie z.B. dem Emissionsverhalten, auf einem Prüfstand statt. Zur Durchführung eines Prüfversuchs am Prüfstand wird der Prüfling, also das Antriebsaggregat oder der Antriebsstrang oder die Antriebsstrangkomponente, am Prüfstand mit einer Belastungsmaschine (in der Regel ein Elektromotor, auch Dynamometer genannt) zu einem Prüfaufbau verbunden, um den Prüfling gegen eine Last betreiben zu können. Die Kopplung von Prüfling und Belastungsmaschine erfolgt in der Regel mittels Kopplungselemente, wie Prüfstandwellen, Kopplungsflanschen, etc. Der Prüfaufbau aus Prüfling, Kopplungselement und Belastungsmaschine bildet ein dynamisches System, das bei entsprechender Anregung (beispielswiese durch die Verbrennungsstöße eines Verbrennungsmotors oder durch Lastsprünge) gemäß dem dynamischen Verhalten des Systems reagiert. Kritisch sind am Prüfstand natürlich Anregungen mit einer Eigenfrequenz des dynamischen Systems, da das kritische Zustände erzeugen kann, die sogar zur Beschädigung oder Zerstörung gewisser Teile, insbesondere der Kopplungselemente, des Prüfaufbaus am Prüfstand führen kann. Die Kenntnis des dynamischen Verhaltens des Prüfaufbaus ist daher für die Durchführung von Prüfversuchen auf einem Prüfstand wichtig.

Am Prüfstand werden aber auch Regler eingesetzt, um Komponenten des Prüfaufbaus, insbesondere die Belastungsmaschine und ein Antriebsaggregat, zur Durchführung des Prüfversuchs zu regeln. Für die Auslegung des Reglers ist ebenfalls eine genaue Kenntnis des dynamischen Verhaltens des Prüfaufbaus wünschenswert, um das Reglerverhalten darauf anpassen zu können und/oder um die Stabilität des Regelsystems sicherzustellen.

Nicht zuletzt werden auf einem Prüfstand oftmals auch sogenannten Beobachter verwendet, um nicht direkt gemessene oder direkt messbare Größen des Prüfaufbaus aus anderen zugänglichen oder verfügbaren Messgrößen zu berechnen. Ein Beispiel hierfür ist das innere Drehmoment des Antriebsaggregats, also das tatsächlich erzeugte und nicht das abgegebene Drehmoment, das am Prüfstand für den Prüflauf häufig benötigt oder verwendet wird.

Für die Auslegung eines Reglers und/oder eines Beobachters wird in der Regel ein Modell des dynamischen Systems, also des Prüfaufbaus, benötigt, was eine ausreichende Kenntnis des dynamischen Systems voraussetzt.

Das dynamische Verhalten des Prüfaufbaus am Prüfstand wird in erster Linie durch die Massenträgheiten der Komponenten des Prüfaufbaus (insbesondere Prüfling und Belastungsmaschine) und durch die Steifigkeiten, eventuell auch der Dämpfung, der Kopplung zwischen Prüfling und Belastungsmaschine (also zwischen den massebehafteten Komponenten des Prüfaufbaus), beispielsweise die Drehsteifigkeit einer Prüfstandwelle, bestimmt. Diese Parameter werden oftmals für jede Komponente einzeln bestimmt oder sind aus Datenblättern für die jeweilige Komponente bekannt. Die Verwendung dieser bekannten Parameter ist aber in der Praxis bei der Durchführung des Prüflaufs oftmals unbefriedigend und hat oftmals zu schlechten Ergebnissen geführt. Der Grund dafür liegt darin, dass am Prüfstand oftmals Adaptionen am mechanischen Aufbau des Prüfaufbaus vorgenommen werden, die das dynamische System ändern. Beispielsweise werden andere Messsensoren, beispielsweise ein Drehmomentensensor an der Prüfstandwelle, verwendet oder es werden am Prüfstand mechanische Komponenten ausgetauscht oder hinzugefügt oder entfernt. Beispielsweise kann ein Adapterflansch zwischen zwei Komponenten des Prüfaufbaus verändert werden. Die Eigenschaften von Komponenten des Prüfaufbaus können sich aber auch durch Alterung verändern, was sich ebenfalls auf das Verhalten des dynamischen Systems auswirkt.

Aus der DE 10 2006 025 878 A1 ist es daher schon bekannt, die Parameter des dynamischen Verhaltens direkt am Prüfstand zu ermitteln. Dazu wird der Prüfaufbau durch eine pseudo-stochastische Drehzahlanregung dynamisch angeregt und die Parameter eines Modells des dynamischen Systems, insbesondere Steifigkeit und Dämpfung einer Verbindungswelle, werden mit Methoden der Identifikationstheorie ermittelt. Mit den identifizierten Parametern des Modells des Prüfaufbaus kann das Verhalten des Prüfaufbaus hinreichend genau beschrieben werden und für die Auslegung eines Beobachters oder eines Reglers, aber auch zur Überwachung des Systems verwendet werden. Bei diesem Ansatz wird ein parametrisches Modell des Prüfaufbaus verwendet, also ein Modell, das die Parameter des dynamischen Systems beinhaltet, und das das Eingangs-/Ausgangsverhalten des dynamischen Systems abbildet. Die Parameter werden dabei als die Pole des dynamischen Systems ermittelt. Eine Schwierigkeit dieses Verfahrens liegt darin, das aufgrund der Drehzahlanregung die sich ergebenden Drehmomente als Ausgangsgrößen des dynamischen Systems gemessen werden müssen, was in der Praxis am Prüfstand schwierig ist. Abgesehen davon müssen vorab gewisse Annahmen zur Modellstruktur getroffen werden, um die Parameter eines angenommenen Modells ermitteln zu können. Wird eine nicht geeignete Modellstruktur gewählt, wird das reale dynamische Verhalten durch das Modell nur bedingt oder ungenau widergegeben. Die richtige Wahl der Modellstruktur ist in der Praxis aber eine schwierige Aufgabe, vor allem bei komplexeren Prüfaufbauten mit mehreren Massen und Kopplungen dazwischen, und kann nur durch Spezialisten erfolgen, was die Anwendbarkeit des Verfahrens einschränkt. Darüber hinaus wird bei der Identifikation kein Rauschen eines Messsignals (z.B. einer gemessenen Drehzahl) berücksichtigt, was zu einem schlechteren Identifikationsergebnis führen kann. Zusätzlich erfolgt die Identifikation in der DE 10 2006 025 878 A1 in einer offenen Schleife, obwohl die Messsignale am Prüfstand in einer geschlossenen Regelschleife gemessen wurden. Auch das kann die Identifikationsgüte herabsetzen, Nicht zuletzt kann eine pseudo-stochastische Drehzahlanregung auch nicht auf den gewünschten oder benötigten Frequenzbereich eingestellt werden. Das kann dazu führen, dass gewisse Frequenzen gar nicht angeregt werden oder mehr als benötigte Frequenzen angeregt werden, was sich ebenfalls wieder negativ auf die Identifikationsgüte auswirken kann.

Auch andere Verfahren gehen von einer bekannten oder gewählten Modellstruktur mit den damit verbundenen Nachteilen aus, beispielsweise das in der US 2019/0017894 A1 oder in Matthews C. et al., "Chassis Dynamometer Torque Control System Design by Direct Inverse Compensation", 1. Januar 2006 beschriebene Verfahren. In Matthews werden nicht einmal Systemparameter bestimmt, sondern ein Block Box Modell der Regelstrecke.

Im Verfahren der JP 2006 300683 A wird ein Systemparameter eines Prüfaufbaus aus der Steigung eines Bereichs eines ermittelten Frequenzganges mit einer Frequenz kleiner einer Antiresonanzfrequenz bestimmt. Mit diesem Vorgehen, kann lediglich das Massenträgheitsmoment des Verbrennungsmotors ermittelt werden, aber kein Systemparameter einer Kopplung oder eines Dynamometers, und ist daher sehr eingeschränkt.

Es ist daher eine Aufgabe der gegenständlichen Erfindung, die Identifikation von Systemparametern eines Prüfaufbaus eines Prüfstandes zu verbessern, insbesondere hinsichtlich der Güte der Identifikation.

Diese Aufgabe wird erfindungsgemäß dadurch gelöst, dass aus dem Frequenzgang eine Modellstruktur eines parametrischen Modells, das das Eingangssignal auf das Ausgangssignal abbildet, abgeleitet wird, anhand der Modellstruktur und einer parametrischen Identifikationsmethode zumindest ein Systemparameter des Prüfaufbaus ermittelt wird, und der zumindest eine identifizierte Systemparameter zur Durchführung des Prüflaufs verwendet wird. Das ermöglicht eine systematische Identifikation der benötigten Systemparameter, wobei zuerst eine grundlegende Charakterisierung des dynamischen Verhaltens des Prüfaufbaus erfolgt, aus der die dem Prüfaufbau zugrundeliegende Modellstruktur abgeleitet werden kann. Damit kann mit der nicht-parametrischen Identifikation unabhängig von der Komplexität des Prüfaufbaus eine geeignete Wahl der Modellstruktur sichergestellt werden. Die folgende parametrische Identifikation nutzt dann die Kenntnis der Modellstruktur, um die Systemparameter zu ermitteln. Ein zusätzlicher Vorteil kann darin gesehen werden, dass die nicht-parametrische Identifikation als auch die parametrische Identifikation dieselben Messgrößen verwendet, was die Durchführung des Identifikationsverfahrens erleichtert.

Dabei können bei der nicht-parametrischen Identifikationsmethode auch Messrauschen des Eingangssignals und/oder des Ausgangssignals berücksichtigt werden, wodurch die Identifikationsgüte verbessert werden kann. Zusätzlich kann mit der nicht-parametrischen Identifikationsmethode auch eine Varianz des Messrauschens des Ausgangssignals und/oder eine Varianz des Messrauschens des Eingangssignals und/oder eine Kovarianz des Rauschens zwischen Eingang und Ausgang ermittelt werden. Diese Varianzen stehen dann auch einer Verwendung im parametrischen Identifikationsverfahren zur Verfügung.

Vorteilhafterweise werden mit der parametrischen Identifikationsmethode Modellparameter des parametrischen Modells ermittelt und daraus durch Vergleich des parametrischen Modells mit einem physikalischen Systemmodell mit dem zumindest einen Systemparameter, der zumindest eine Systemparameter von einer Systemkomponente des Prüfaufbaus ermittelt. Das kann erleichtert werden, wenn das parametrische Modell in Teilmodelle mit jeweils Modellparametern zerlegt wird und durch Vergleich zumindest eines Teilmodells mit einem physikalischen Teilmodell mit dem zumindest einen Systemparameter, der zumindest eine Systemparameter aus den Modellparametern des Teilmodells ermittelt wird.

Der zumindest eine identifizierte Systemparameter kann für die Durchführung des Prüflaufs verwendet werden, indem der zumindest eine Systemparameter für einen Entwurf eines Reglers für zumindest eine Komponente des Prüfaufbaus verwendet wird. Oder indem der zumindest eine Systemparameter für einen Entwurf eines Filters verwendet wird, das entweder einen Sollwert für einen Regler für zumindest eine Komponente des Prüfaufbaus oder für eine einem Regler für zumindest eine Komponente des Prüfaufbaus zugeführte Regelungsabweichung filtert. Oder indem eine Änderung des zumindest einen Systemparameters über die Zeit überwacht wird. Oder indem der zumindest eine Systemparameter verwendet wird, um das dynamische Verhalten des Prüfaufbaus an ein gewünschtes dynamisches Verhalten anzupassen.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 einen Prüfstand mit einem Zweimasseschwinger als Prüfaufbau,
Fig.2a, 2b Beispiele von Frequenzgängen eines Zweimasseschwingers,
Fig.3 einen Regler zur Regelung einer Komponente des Prüfaufbaus,
Fig.4 die Verwendung eines Filters zur Durchführung eines Prüflaufs am Prüfstand,
Fig.5 ein Beispiel eines Dreimassenschwingers und
Fig.6 eine Umsetzung er Erfindung am Prüfstand.

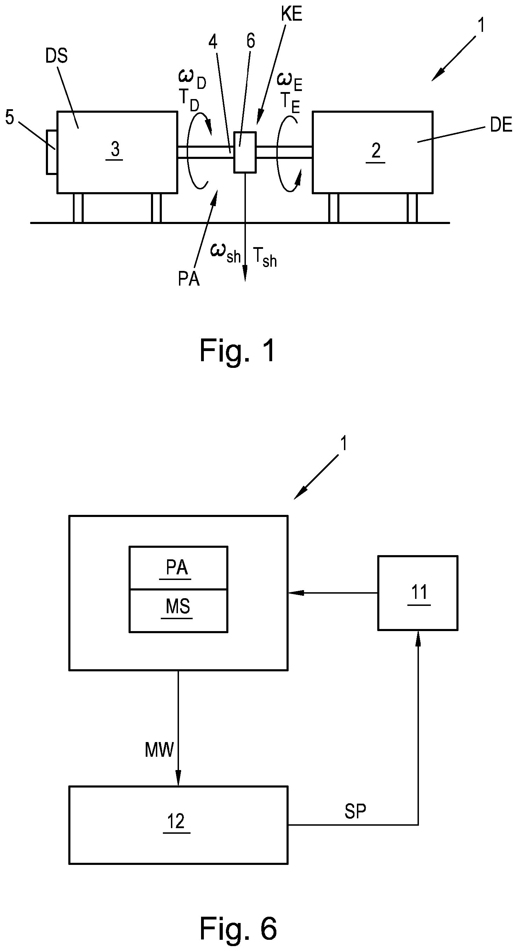

Die Erfindung geht für die Durchführung eines Prüflaufs von einem Prüfaufbau PA auf einem Prüfstand 1 aus, mit einem Prüfling mit einem Drehmomentenerzeuger DE, beispielsweise ein Antriebsaggregat wie ein Verbrennungsmotor 2, und einer damit verbundenen Drehmomentensenke DS, beispielsweise eine Belastungsmaschine 3 (Dynamometer), als Last, wie in einem einfachen Fall in Fig.1 dargestellt. Der Drehmomentenerzeuger DE ist beispielsweise ein Verbrennungsmotor 2, kann aber auch ein Antriebsstrang mit Verbrennungsmotor 2 und/oder auch Elektromotor, oder ein Teil davon, sein. Der Prüfling umfasst zumindest einen Drehmomentenerzeuger DE. Drehmomentenerzeuger DE und Drehmomentensenke DS sind über zumindest ein Kopplungselement KE, beispielsweise eine Prüfstandwelle 4, zur Übertragung eines Drehmoments mechanisch miteinander verbunden. Auch das Kopplungselement 4 kann mehrere nicht vernachlässigbare massebehaftete mechanische Komponenten, beispielsweise Kopplungsflansche, Getriebe, usw., umfassen. Damit kann der Prüfaufbau PA hinsichtlich der die Dynamik beeinflussenden Komponenten beliebig komplex werden. Das dynamische Verhalten des Prüfaufbaus PA wird in bekannter Weise in erster Linie durch die Massenträgheiten J der Komponenten des Prüfaufbaus PA (also durch die nicht vernachlässigbaren, massebehafteten Teile) und der Art und Weise der Kopplung (Steifigkeit c, Dämpfung d) dazwischen bestimmt. Für die Durchführung eines Prüfversuchs mit einem solchen Prüfaufbau PA ist die Kenntnis der dynamischen Systemparameter wichtig, um das dynamische Verhalten des Prüfaufbaus PA zu kennen. Beispielsweise ist die Kenntnis von Resonanzfrequenzen $\omega_R$ des Prüfaufbaus PA wichtig, um eine Anregung im Bereich der Resonanzfrequenzen $\omega_R$ zu vermeiden. Abgesehen davon soll mit dem Prüflauf am Prüfstand 1 das Verhalten des Prüflings nachgebildet werden, das sich ergeben würde, wenn der Prüfling in einem realen Fahrzeug eingebaut ist und mit dem realen Fahrzeug bewegt wird. Daher ist es in diesem Zusammenhang wichtig, dass das dynamische Verhalten des Prüflings am Prüfstand 1 in etwa dem dynamischen Verhalten im Fahrzeug entspricht, um realitätsnahe Prüfläufe zu ermöglichen. Wenn die dynamischen Systemparameter des Prüfaufbaus PA bekannt sind, dann können am Prüfstand 1 gezielt Maßnahmen getroffen werden, beispielsweise mechanische Maßnahmen wie weitere oder andere Massen, Steifigkeit und/oder Dämpfungen, oder regelungstechnische Maßnahmen, wie Hinzufügen von Filtern und/oder Reglern, um das dynamische Verhalten am Prüfstand 1 dem realen Verhalten anzupassen. Auch für die Auslegungen möglicher Regler zum Regeln bestimmter Komponenten des Prüfaufbaus PA, beispielsweise ein Dynoregler $R_D$ für die Belastungsmaschine 3, werden die Systemparameter benötigt, um das Reglerverhalten optimal an das konkrete dynamische Verhalten des Prüfaufbaus PA anpassen zu können.

Die Erfindung geht davon aus, dass das dynamische Verhalten beschreibende dynamische Systemparameter, insbesondere Massenträgheitsmomente J, Drehsteifigkeiten c, Drehdämpfungen d, Resonanzfrequenzen $\omega_R$ oder Tilgungsfrequenzen $\omega_T$, des konkreten Prüfaufbaus PA, zumindest teilweise, nicht bekannt sind und vor dem Durchführen eines Prüfversuchs am Prüfstand 1 bestimmt werden sollen.

Dazu werden erfindungsgemäß zuerst mit einer nicht-parametrischen Identifikationsmethode der grundlegende Charakter des dynamischen Verhaltens des Prüfaufbaus PA bestimmt, woraus eine Modellstruktur eines Modells des Prüfaufbaus PA mit das dynamische Verhalten beschreibenden Systemparameter SP des Prüfaufbaus PA abgeleitet wird. Anschließend werden anhand der Modellstruktur mit den Systemparametern SP mittels einer parametrischen Identifikationsmethode die Systemparameter SP des Modells bestimmt. Bei der nicht-parametrischen Identifikation werden nur die gemessenen Eingangssignale u(t) und gemessenen Ausgangssignale y(t) untersucht.

Anhand der nicht-parametrischen Identifikationsmethode wird der Frequenzgang (charakterisiert durch die Amplitude, und gegebenenfalls auch die Phase, über die Frequenz) des Prüfaufbaus PA ermittelt. Für den Frequenzgang wird das physikalische dynamische System (hier der Prüfaufbau) bekanntermaßen mit einem dynamischen Signal u(t) (Eingangssignal) mit einem bestimmten Frequenzgehalt angeregt und die Antwort y(t) (Ausgangssignal) am Prüfaufbau PA gemessen. Das Eingangssignal u(t) ist beispielsweise eine Drehzahl $\omega_D$ der Drehmomentensenke DS (z.B. Belastungsmaschine 3) und das Ausgangssignal y(t) beispielsweise ein Wellenmoment $T_{sh}$ an der Prüfstandwelle 4 oder eine Drehzahl $\omega_E$ des Drehmomentenerzeugers DE. Typischerweise sind auf einem Prüfstand 1 auch Messsensoren MS vorgesehen, um die Messwerte MW bestimmter Messgrößen (Eingangssignal u(t), Ausgangssignal y(t)) zu erfassen (Fig.6), beispielsweise ein Drehzahlsensor 5 zum Erfassen der Drehzahl $\omega_D$ der Belastungsmaschine 3 und/oder ein Drehmomentensensor 6 zum Erfassen eines Wellenmoments $T_{sh}$, wie in Fig.1 dargestellt. Auch andere Messgrößen können messtechnisch erfasst werden, wie beispielsweise die Drehzahl $\omega_E$ oder das erzeugte Drehmoment $T_E$ eines Drehmomentenerzeugers DE (z.B. Verbrennungsmotor 2) oder das Drehmoment $T_D$ der Drehmomentensenke DS.

Hierbei ist es jedoch nicht entscheidend, was als Eingangssignal u(t) und was als Ausgangssignal y(t) verwendet wird. Die nachfolgend beschriebene Methodik ist unabhängig davon.

Aus der Fouriertransformierten des Eingangssignals u(t) und des Ausgangssignal y(t) wird in bekannter Weise der Frequenzgang ermittelt. Wenn mit U(k) die Fouriertransformierte des Eingangssignals u(t) bei Frequenz k=j$\omega_k$ bezeichnet wird und mit Y(k) die Fourier Transformierte des Ausgangssignals y(t) bei Frequenz k=j$\omega_k$, dann ergibt sich der Frequenzgang G(k) als Quotient aus den Fouriertransformierten Y(k) des Ausgangssignals y(t) und U(k) des Eingangssignals u(t). Hierbei ist es auch bekannt, ein Rauschen des Eingangssignals u(t) und des Ausgangssignals y(t) zu berücksichtigen. Ein Rauschen ergibt sich beispielsweise aufgrund eines Messrauschens beim Messen von physikalischen Größen, durch Abweichungen zwischen einer Sollwertvorgabe am Prüfstand und dem Einregeln des Sollwertes am Prüfstand, durch Prozessrauschen, usw. Bezeichnet $n_u(t)$ das Rauschen am Eingang und $n_y(t)$ das Rauschen am Ausgang, dann kann das Eingangssignal u(t) im Zeitbereich auch als u(t) = $u_0(t)$ + $n_u(t)$ oder im Frequenzbereich als U(k) = $U_0(k)$ + $N_u(k)$ angeschrieben werden und das Ausgangssignal y(t) im Zeitbereich auch als y(t) = $y_0(t)$ + $n_y(t)$ oder im Frequenzbereich als Y(k) = $Y_0(k)$ + $N_y(k)$, mit den rauschfreien Signalen $u_0$, $y_o$ bzw. $U_0$, $Y_0$ und den Rauschsignalen $n_u$, $n_y$ bzw. $N_u$, $N_y$.

Um den Frequenzgang G bei Vorhandensein von Eingangs- und Ausgangsrauschen anzunähern, gibt es verschiedene bekannte nicht-parametrische Identifikationsmethoden, beispielsweise die Spektralanalyse oder die Methode der lokalen Polynome (Local Polynom Method, LPM). Bei der Spektralanalyse wird entweder das Amplitudenspektrum oder das Leistungsspektrum des Frequenzganges ausgewertet, wie z.B. in L. Ljung, "System Identification: Theory for the User", 2nd Edition Prentice Hall PTR, 1999 oder in Thomas Kuttner, "Praxiswissen Schwingungsmesstechnik", S.325-335, Springer Vieweg 2015 beschrieben ist. Die Methode der lokalen Polynome ist beispielsweise in R. Pintelon, et al., "Estimation of non-paramteric noise and FRF models for multivariable systems - Part I: Theory", Mechanical Systems and Signal Processing, volume 24, Issue 3, p.573-595, 2010 beschrieben. Die Ermittlung des Frequenzganges G wird nachfolgend kurz am Beispiel LPM erläutert.

Bei LPM wird der Frequenzgang G lokal um eine lokale Frequenz k durch ein Polynom angenähert. Das wird für alle Frequenzen j$\omega_k$ des Frequenzganges G gemacht. Wird eine generalisierte Frequenz $\Omega_k$ verwendet, mit $\Omega_k$ = j$\omega_k$ für den zeitkontinuierlichen Fall und $\Omega_k$ = $e^{-j\omega k}$ für den zeitdiskreten Fall, kann das Eingangs-Ausgangsverhalten des dynamischen Systems (Prüfaufbau PA) in der Form

$$Y(k) = G(\Omega_k)U(k) + T(\Omega_k) + V(k)$$

angeschrieben werden. Darin bezeichnet G($\Omega_k$) die Fouriertransformierte der Übertragungsfunktion des dynamischen Systems (also den Frequenzgang zwischen dem gewählten Eingang und Ausgang), T($\Omega_k$) einen transienten Fehler im Ausgang an der Frequenz $\Omega_k$, der nicht auf die Anregung zurückzuführen ist, und V(k) das Messrauschen des Ausgangssignals. Darin sind U(k) und Y(k) die Fouriertransformierten des gemessenen Eingangssignals u(t) und Ausgangssignals y(t).

Die von der Frequenz $\Omega_k$ abhängigen Größen werden durch lokale Polynome um eine lokale Frequenz $\Omega_k$ angenähert. Die Frequenzen um $\Omega_k$ werden durch die Variable r = -n, -n+1, ..., n indiziert, wobei n vorgegeben oder gewählt wird. Das führt zu

$$G(\Omega_{k+r}) \approx G(\Omega_k) + \sum_{s=1}^{R} g_s(k)r^s$$

$$T(\Omega_{k+r}) \approx T(\Omega_k) + \sum_{s=1}^{R} t_s(k)r^s$$

$$Y(k+r) \approx \left[ G(\Omega_k) + \sum_{s=1}^{R} g_s(k)r^s \right] U(k+r) + T(\Omega_k) + \sum_{s=1}^{R} t_s(k)r^s + V(k+l)$$

Darin bezeichnen $g_s$ und $t_s$ die 2(R + 1) unbekannten Parameter der lokalen Polynome der Ordnung R (die gewählt oder vorgegeben wird). Damit erhält man aufgrund der r für jede Frequenz k insgesamt 2n + 1 Gleichungen für 2(R + 1) Unbekannte ($g_s$, $t_s$). Mit einem Parametervektor O(k) = [G($\Omega_k$)$g_1(k)g_2(k)\cdots g_R(k)$T($\Omega_k$)$t_1(k)t_2(k)\cdots t_R(k)$] können die 2n + 1 Gleichungen in der Matrixform Y(k) $\approx$ $\Phi$(k)$\Theta$(k) geschrieben werden, mit der Matrix

$$\Phi(k) = \begin{bmatrix} & & & \cdot & & & \\ & & & \cdot & & & \\ [1 & r^1 & \ldots & r^R] & U(k+r) & 1 & r^1 \ldots r^R \\ & & & \cdot & & & \\ & & & \cdot & & & \end{bmatrix}$$ . Darin sind die sich ergebenden 2n + 1

Gleichungen für die Frequenzen k jeweils übereinander gestapelt. Der Vorteil bei dieser Methode ist, dass der transiente Anteil $T(\Omega_k)$ direkt mitgeschätzt werden kann und nicht durch Fensteransätze für gewisse Frequenzbereiche bestimmt werden muss, wie beispielsweise bei der Spektralanalyse.

Der Parametervektor O(k) kann dann z.B. im Sinne einer kleinsten Quadrate Approximation aus einer Parameterschätzung anhand der Gleichung $\hat{\Theta}(k) = [\Phi(k)^H \Phi(k)]^{-1} \Phi(k)^H Y(k)$ geschätzt werden, wobei "()$^H$" die adjungierte Matrix (transponiert und komplex konjugiert) bezeichnet.

Mit dem sich ergebenden Residuum $e(\Omega_{k+1}) = Y(k+r) - [G(\Omega_{k+1})U(k+r) + T(\Omega_{k+1})]$ der kleinsten Quadrate Approximation kann die Varianz $\sigma_Y^2(k)$ des Messrauschens des Ausgangssignals mit

$$\sigma_Y^2(k) = \frac{1}{2n+1-R} \sum_{r=-n}^{n} |e(\Omega_{k+1})|^2$$

berechnet werden.

Diese Approximation liefert dann auch direkt Schätzungen für den Frequenzgang $\hat{G}(\Omega_k)$ und auch für die transienten Anteile $\hat{T}(\Omega_k)$. Mit "^" werden in weitere Folge immer Schätzungen bezeichnet. Je nachdem was als Eingangssignal U(k) und als Ausgangssignal Y(k) verwendet wird, ergeben sich natürlich unterschiedliche Frequenzgänge $\hat{G}(\Omega_k)$.

Auch der Fall zusätzlich verrauschter Eingangssignale u(t) oder der Fall einer Rückkopplung des verrauschten Ausgangssignals y(t) auf den Eingang (z.B. bei einem geschlossenen Regelkreis), was ebenfalls zu einem verrauschten Eingangssignal u(t) führt, kann abgedeckt werden. Um beim Vorhandensein von Eingangsrauschen systematische Fehler in der Parameterschätzung zu vermeiden, erfolgt die Parameterschätzung in diesem Fall vorteilhafterweise am geschlossenen Regelkreis. Das ist insofern keine wesentliche Einschränkung, da technische System wie ein Prüfaufbau PA auf einem Prüfstand 1 üblicherweise in einem geschlossenen Regelkreis betrieben werden. Hierbei geht man von einem Referenzsignal s(t) (bzw. der Fouriertransformierten S(k)) aus, das der Sollwertvorgabe für geschlossenen Regelkreis entspricht. Der Zusammenhang zwischen dem Eingangssignal u(t) und dem Referenzsignal s(t) ergibt sich mit der Übertragungsfunktion R des Reglers und den aktuellen Istwerten $y_{ist}$ zu $u = (s - y_{ist}) \cdot R$. Es werden dann beispielsweise wie oben beschrieben der Frequenzgang $G_{ru}(\Omega_k)$ des Referenzsignals zum Eingang U(k) und der Frequenzgang $G_{ry}(\Omega_k)$ des Referenzsignals zum Ausgang Y(k) ermittelt, was zu geschätzten Frequenzgängen $\hat{G}_{ru}(\Omega_k)$ und $\hat{G}_{ry}(\Omega_k)$ führt, mit $G_{rz}(\Omega_k) = [G_{ry}(\Omega_k) \; G_{ru}(\Omega_k)]^T$. Mit $V_Y(k)$ wird das Messrauschen des Ausgangssignals Y(k) bezeichnet und mit Vu(k) das Messrauschen des Eingangssignals U(k). Mit $Z(k) = [Y(k) \; U(k)]^T$ und $Vz(k) = [V_Y(k) \; V_U(k)]^T$ kann die Systemgleichung dann in der Form $Z(k) = G_{rz}(\Omega_k)R(k) + T_{rz}(\Omega_k) + V_Z(k)$ geschrieben werden, worin $T_{rz}(\Omega_k) = [T_{ry}(\Omega_k) \; T_{ru}(\Omega_k)]^T$ den transienten Systemfehler auf den Eingang und den Ausgang bezeichnet. Eine Schätzung des Frequenzganges $\hat{G}(\Omega_k)$ bei Vorhandensein von Eingangsrauschen und Ausgangsrauschen ergibt sich dann aus $\hat{G}(\Omega_k) = \hat{G}_{ry}(\Omega_k)\hat{G}_{ru}^{-1}(\Omega_k)$ .

Analog zum Fall mit nur Ausgangsrauschen kann auch im Fall von Eingangsrauschen und Ausgangsrauschen eine Varianz $\sigma_Y^2(k)$ des Messrauschens des Ausgangssignals, eine Varianz $\sigma_U^2(k)$ des Messrauschens des Eingangssignals und eine Kovarianz $\sigma_{YU}^2(k)$ des Rauschens zwischen Eingang und Ausgang ermittelt werden.

Für die Anregung des dynamischen Systems wird der Drehmomentenerzeuger DE, wie der Verbrennungsmotor 2, vorzugsweise geschleppt, also nicht befeuert, betrieben. Es wäre zwar auch aktiv betriebener Drehmomentenerzeuger DE, wie ein befeuerter Verbrennungsmotor 2, bei Anregung möglich, was aber die Identifikation komplexer machen würde, weil der Drehmomentenerzeuger DE selbst Drehzahlschwingungen einbringen würde. Für die Anregung wird daher vorzugsweise die mit dem Drehmomentenerzeuger DE verbundene Drehmomentensenke DS, die Belastungsmaschine 3, die durch Ausführung als Elektromotor auch antreiben kann, verwendet und es werden zur Anregung Drehzahlschwingungen eingeprägt. Die Anregung kann mit verschiedenen Signalen, wie beispielsweise einem Multisine-Signal (bei dem in jedem Zeitpunkt gleichzeitig mehrere Frequenzen angeregt werden) oder einem Chirp-Signal (bei dem zu jedem Zeitpunkt eine Frequenz angeregt wird, beispielsweise mit linearem Frequenzanstieg) erfolgen. Das Anregesignal ist die Sollwertvorgabe für den Prüfstand 1 für den Anregebetrieb. Beispielsweise werden als Anregesignal Drehzahl-Sollwertvorgaben für den Regler der Belastungsmaschine 3 vorgegeben.

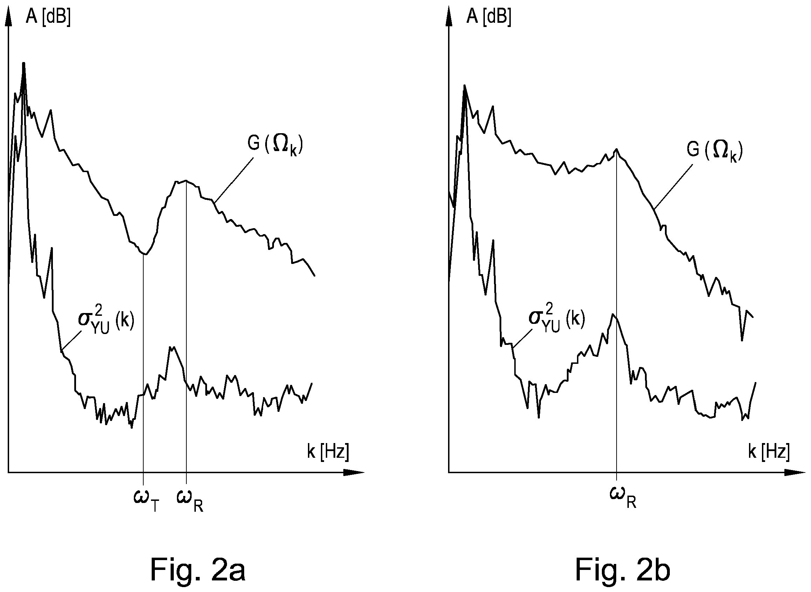

Aus einem Frequenzgang $G(\Omega_k)$ können einige wichtige Eigenschaften des dynamischen Systems abgeleitet werden, wie anhand der Fig.2a und 2b, in denen jeweils die Amplitude A = $|G(\Omega_k)|$ des Frequenzgang $G(\Omega_k)$ dargestellt ist, beispielhaft erläutert wird. Dargestellt sind in Fig.2a der Frequenzgang $G(\Omega_k)$ mit dem Drehmoment $T_D$ der Belastungsmaschine 3 als Eingang u(t) und der Drehzahl $\omega_D$ der Belastungsmaschine 3 als Ausgang y(t), sowie in Fig.2b der Frequenzgang $G(\Omega_k)$ mit dem Drehmoment $T_D$ der Belastungsmaschine 3 als Eingang u(t) und der Drehzahl $\omega_E$ des Verbrennungsmotors 2 als Ausgang y(t). Das bedeutet, dass bei Anregung der Eingang u(t) und der Ausgang u(t) gemessen werden und daraus wie beschrieben aus deren Fouriertransformierten U(k), Y(k) der Frequenzgang $G(\Omega_k)$ ermittelt wird. Dabei können natürlich verschiedene Eingangssignal / Ausgangssignal Kombinationen verwendet werden, beispielsweise je nachdem welche Messgrößen vorhanden sind.

Aus dem Frequenzgang $G(\Omega_k)$ können beispielsweise Resonanzfrequenzen $\omega_R$ und/oder Tilgungsfrequenzen $\omega_F$ abgeleitet werden. Beide Frequenzen können durch die Ermittlung von Minima und Maxima und der Gradienten im Frequenzgang $G(\Omega_k)$ ermittelt werden. Eine Tilgungsfrequenz $\omega_T$ ist demnach ein Minimum mit Gradientenumkehr von negativ auf positiv. Eine Resonanzfrequenz $\omega_R$ ein Maximum mit Gradientenumkehr von positiv auf negativ. Natürlich können im Frequenzgang $G(\Omega_k)$ mehrere oder auch keine Tilgungsfrequenzen $\omega_T$ und/oder Resonanzfrequenzen $\omega_R$ auftreten. Weiters können aus dem Frequenzgang $G(\Omega_k)$ auch Information zu den Nullstellen abgeleitet werden. Grundsätzlich sind charakteristische Frequenzgänge für verschiedene Systeme bekannt, beispielsweise für ein Zweimassen-Schwingsystem (Fig.2a, 2b) oder ein Mehrmassenschwinger. Durch Vergleich der bekannten Frequenzgänge mit dem ermittelten Frequenzgang $G(\Omega_k)$ kann auf eine bestimmte Modellstruktur geschlossen werden. Nachdem sich der Frequenzgang $G(\Omega_k)$ in der Form Zählerpolynom zu Nennerpolynom darstellen lässt, wird erfindungsgemäß , beispielsweise anhand des Vergleiches, die Ordnung des Zähler- und Nennerpolynoms (was der Modellstruktur entspricht) festgelegt. Auch aus der Anzahl der Resonanzfrequenzen $\omega_R$ können Rückschlüsse auf die Modellstruktur erfolgen. Die Anzahl der Resonanzfrequenzen $\omega_R$ entspricht dabei üblicherweise der Anzahl der schwingfähigen Massen minus eins. Ein Zweimassenschwingsystem hat demnach eine Resonanzfrequenz $\omega_R$ (wie z.B. in Fig.2a, 2b).

Für verschiedene Systemkonfigurationen (mit schwingfähigen Massen und mechanischen Kopplungen dazwischen) ergeben sich daher unterschiedliche charakteristische Frequenzgänge $G(\Omega_k)$, die allerdings bekannt sind. Die charakteristischen Frequenzgänge $G(\Omega_k)$ könne beispielsweise hinterlegt sein, um durch Vergleich des geschätzten Frequenzganges $\hat{G}(\Omega_k)$ auf eine Modellstruktur des vorliegenden Prüfaufbaus PA schließen zu können.

In den Fig.2a und 2b sind außerdem auch die jeweiligen ermittelten Kovarianzen $\sigma_{YU}^2(k)$ dargestellt.

Der Vorteil bei diesem Vorgehen ist auch darin zu sehen, dass man für die nicht-parametrische Identifikation unter Umständen auch ohne einer Messung eines Drehmoments am Prüfstand 1 auskommen kann, beispielsweise zur Auswahl einer Modellstruktur. Das ermöglicht auf einfache Weise, insbesondere ohne Aufnahme eines Drehmomentenmessflansches in den Prüfaufbau PA, eine erste Abschätzung des dynamischen Verhaltens des Prüfaufbaus PA am Prüfstand 1.

Auf die nicht-parametrische Identifikationsmethode folgt erfindungsgemäß eine parametrische Identifikationsmethode, mit der das dynamische Eingangs-Ausgangsverhalten des dynamischen technischen Systems (Prüfaufbau PA) mit einem Modell mit Systemparametern SP, die das dynamische Verhalten des Prüfaufbaus PA beschreiben, angenähert wird. Auch hierfür gibt es bekannte Methoden, sowohl im Zeitbereich, als auch im Frequenzbereich, die nachfolgend kurz erläutert werden.

Die parametrische Identifikation basiert auf einem Modell des dynamischen Systems mit den Modellparametern $\theta$, das den Ausgang y(k) aus dem Eingang u(k) und einer Störung berechnet. Die Abbildung des Eingangs u(k) auf den

$$G(q, \theta) = \sum_{k=1}^{\inf} g_\theta q^{-k}$$

Ausgang y(k) erfolgt mit einem Strecken-modell , mit Streckenmodellparametern $g_\theta$ und den Rückwärtsverschiebeoperator $q^{-k}$. Eine Störung (z.B. durch Messrauschen) kann dabei mit einem Störmodell H(q, $\theta$) und einer Wahrscheinlichkeitsverteilung e, oder eine Wahrscheinlichkeitsdichtefunktion $f_e$, modelliert werden, mit

$$H(q, \theta) = 1 + \sum_{k=1}^{\inf} h_\theta q^{-k}$$

und Rauschmodellparametern he. Zu beachten ist hier, dass k darin keine Frequenz bezeichnet wie bei der nicht-parametrischen Identifikation, sondern einen Zeitindex der zeitdiskreten Signale, z.B. u(k) und y(k). Das Modell des dynamischen Systems kann dann in einer zeitdiskreten Notation als y(k) = G(q, $\theta$)u(k) + H(q, $\theta$)e(k) angeschrieben werden. Das Ziel ist folglich, mit diesem Modell den Ausgang y(k) zum Zeitpunkt k aus bekannten, vergangenen Daten des Eingangs u und des Ausgangs y bis zum Zeitpunkt k-1 (also vergangene Daten) zu schätzen.

Zur Verfügung stehen die Daten $Z_K$ = {u(1), y(1), ..., u(k-1), y(k-1), u(k), y(k)}. Hierfür gibt es verschiedene bekannte Ansätze.

Ein Beispiel für eine parametrische Identifikationsmethode im Zeitbereich ist die sogenannte Prediction Error Method (PEM), wie beispielsweise in L. Ljung, "System Identification: Theory for the User", 2nd Edition Prentice Hall PTR, 1999 beschrieben. Eine bekannte Methode im Frequenzbereich ist die Maximum Likelihood Estimator Method (MLE).

Bei PEM geht man vom Modell des dynamischen Systems

$$y(k) = G(q,\theta)u(k) + \underbrace{H(q,\theta)e(k)}_{v(k)}$$

aus, worin $\theta$ die Modellparameter sind. Darin bezeichnet v(k) farbiges Rauschen. Wird als Wahrscheinlichkeitsverteilung e(k) weißes Rauchen verwendet, dann kann das farbige Rauschen v(k) auch als

$$v(k) = H(q,\theta)e(k) = \sum_{t=0}^{\infty} h(t)e(k-t) = e(k) + m(k-1)$$

angeschrieben werden. Darin ist m(k-1) der Mittelwert bis zum Zeitpunkt (k-1). Das kann noch in der Form m(k-1)=$\hat{v}$(k|k-1)=(H(q,$\theta$)-1)e(k)=(1-H$_{inv}$(q,$\theta$))v(k) umgeschrieben werden, mit der Inversen H$_{inv}$ von H. Die Schätzung des Ausgangs $\hat{y}$(k|k-1) aus den Daten $Z_K$ kann dann in der folgenden Form angeschrieben werden:

$$\hat{y}(k \mid \theta, Z_K) = G(q,\theta)u(k) + \hat{v}(k \mid k-1) = H_{inv}(q,\theta)G(q,\theta)u(k) + (1 - H_{inv}(q,\theta))y(k).$$

Der Schätzfehler ergibt sich dann zu $\varepsilon$(k, $\theta$) = y(k)-$\hat{y}$(k, $\theta$). Um die Modellparameter $\theta$ zu ermitteln kann eine Kostenfunktion J($\theta$, $Z_K$) angeschrieben werden, die den gewichteten Schätzfehler minimiert. Dazu kann beispielsweise eine mathematische Norm l(), z.B. die Euklidische Norm (2-Norm) l() = $\|()\|_2$ , des gewichteten Schätzfehlers verwendet werden.

Bezeichnet $\varepsilon_F$(k, $\theta$) = F(q)$\varepsilon$(k, $\theta$) den gewichteten Schätzfehler mit den Gewichten F(q), dann kann die Kosten-

$$J(\theta, Z_K) = \frac{1}{K} \sum_{k=0}^{K-1} l(\varepsilon_F(k,\theta))$$

funktion beispielsweise als angeschrieben werden. Diese Kostenfunktion J wird mini-

$$\hat{\theta} = \arg\min_{\theta} J(\theta, Z_K)$$

miert, um die Modellparameter $\theta$ zu schätzen: .

Um aus den Modellparametern $\theta$ die gesuchten Systemparameter SP des dynamischen Systems zu bestimmen, kann das zeitdiskrete Modell y(k) = G(q, $\theta$)u(k)+H(q, $\theta$)e(k) in einer vorteilhaften praktischen Implementierung mit Polynomen A(q) = 1+ $a_1q^{-1}$ +... + $a_{na}q^{-na}$ , B(q) = 1+$b_1q^{-1}$ +...+$b_{nb}q^{-nb}$ und C(q) = 1+ $c_1q^{-1}$ +...+ $c_{nc}q^{-nc}$ auch in der Form

$$y(k) = \underbrace{\frac{B(q)}{A(q)}}_{G} u(k) + \underbrace{\frac{C(q)}{A(q)}}_{H} e(k)$$

(ARMAX Modell) angeschrieben werden. Die Modellparameter G H $\theta$ ergeben sich dann zu $\theta$ =[$a_1$ ... $a_{na}$ $b_1$ ... $b_{nb}$ $c_1$ ... $c_{nc}$]. Im Falle von weißen Rauschen e(k) reduziert sich das auf

$$y(k) = \underbrace{\frac{B(q)}{A(q)}}_{G} u(k) + \underbrace{\frac{1}{A(q)}}_{H} e(k)$$

(ARX Modell) mit $\theta$ = [$a_1$ ... $a_{na}$ $b_1$ ... $b_{nb}$]. Die Ordnung $n_a$, $n_b$, $n_c$ der Polynome A, B, C ist gemäß der mit der nicht-parametrischen Identifikation festgelegten Modellstruktur vorgegeben.

Bei einem Zweimassenschwinger, wie beispielsweise bei einem Prüfaufbau nach Fig.1, ergibt sich als Nennerpolynom A(q) ein Polynom mit Ordnung $n_a$=2 und als Zählerpolynom B(q) ein Polynom mit Ordnung $n_b$=1.

Um auf die gesuchten Systemparameter SP zu kommen, wird von einer Äquivalenz der Modellparameter im zeitdiskreten Modell und den Parametern eines physikalischen Modells des dynamischen Systems ausgegangen.

Beispielsweise kann der Prüfaufbau PA nach Fig.1 mit Verbrennungsmotor 2 (mit Massenträgheit $J_E$), Prüfstandwelle 4 (mit Drehsteifigkeit c und Drehdämpfung d) und Belastungsmaschine 3 (mit Massenträgheitsmoment $J_D$) physikalisch gemäß

$$\frac{\omega_D}{T_D} = \frac{1}{s} \frac{J_E s^2 + ds + c}{J_E J_D s^2 + d(J_E + J_D)s + c(J_E + J_D)}$$

$$\frac{\omega_E}{T_D} = \frac{1}{s}\frac{ds+c}{J_E J_D s^2 + d(J_E+J_D)s + c(J_E+J_D)}$$

modelliert werden. Ein anderes Beispiel ergibt sich beim Zweimassenschwinger der Fig.1 mit dem Eingangssignal $\omega_D$

$$\frac{\omega_E}{\omega_D} = \frac{c+ds}{J_E s^2 + ds + c}$$

und dem Ausgangssignal $\omega_E$, was zu einem Modell führt. In diesem Fall wäre natürlich auch der Frequenzgang G mit diesem Eingangssignal und Ausgangssignal ermittelt worden. Darin erkennt man auch, dass sich bei verschiedenen Eingangs- und/oder Ausgangssignalen auch verschiedene Modelle ergeben. Diese Gleichungen können in eine zeitdiskrete Notation gebracht werden, was einen Vergleich der Systemparameter SP ($J_E$, c, d, $J_D$) mit den geschätzten Modellparametern $\theta = [a_1 ... a_{na} b_1 ... b_{nb}]$ ermöglicht. Daraus können die Systemparameter SP ($J_E$, c, d, $J_D$) ermittelt werden.

Nachdem die Modellstruktur aus dem Frequenzgang G bekannt ist, kann das Modell auch in Teilmodelle unterteilt werden, was die Ermittlung der Systemparameter SP ($J_E$, c, d, $J_D$) erleichtert. Ein Zweimasseschwinger kann beispielsweise in ein erstes Teilmodell für den Verbrennungsmotor 2, ein zweites Teilmodell für die Prüfstandwelle 4 und ein drittes Teilmodell für die Belastungsmaschine 3 unterteilt werden. Damit kann auch das zeitdiskrete Modell in entsprechende Teilmodelle unterteilt werden, womit sich die Ordnungen der Teilmodelle entsprechend reduziert. Die Modellparameter der Teilmodelle werden dann wie oben beschrieben geschätzt.

In gleicher Weise werden dann physikalische Teilmodelle verwendet, was nachfolgend wieder am Beispiel des Zweimassenschwingers beschrieben wird.

Für das erste Teilmodell wird das Momentengleichgewicht für den Verbrennungsmotor 2 (Fig.1) in zeitkonti-

$$\omega_E = \frac{1}{J_E s}\big(T_E(s) - T_{sh}(s)\big)$$

nuierlicher Notation in der Form angeschrieben, mit dem Laplace-Operator s, der Drehzahl $\omega_E$ des Verbrennungsmotors 2, dem inneren Drehmoment $T_E$ des Verbrennungsmotors 2 und dem Wellenmoment $T_{sh}$. Nachdem der Verbrennungsmotor 2 vorzugsweise geschleppt betrieben wird, ergibt sich im nichtstochastischen Teil

$$\omega_E = -\frac{1}{J_E s}T_{sh}(s) \qquad \omega_E(k) - \omega_E(k-1) = -\frac{Ts}{J_E}T_{sh}(k)$$

der Modellstruktur $T_E=0$ und folglich oder in zeitdiskreter Notation mit der bekannten Abtastzeit Ts (typischerweise im kHz-Bereich). Durch Vergleich erhält man dann unmittelbar aus dem ersten Teilmodell $a_1=-1$ und $b_1=Ts/J_E$, woraus der Systemparameter $J_E$ ermittelt werden kann. Das ermöglicht auch eine Abschätzung der Güte der Parameterschätzung. Wenn der geschätzte Modellparameter $a_1$ nahe eins liegt, dann kann von einer hohen Identifikationsgüte ausgegangen werden.

Um die Systemparameter SP der Kopplung zwischen Verbrennungsmotor 2 und Belastungsmaschine 3, Drehdämpfung d und Drehsteifigkeit c, zu bestimmen, wird das zweite Teilmodell für die Prüfstandwelle 4 herangezogen. Ausgehend vom Drehmomentengleichgewicht an der freigeschnittenen Prüfstandwelle 4 kann mit einem $\Delta\omega = \omega_E - \omega_D$, mit der Drehzahl $\omega_D$ der Belastungsmaschine 3 und wieder mit der Annahme $T_E=0$ angeschrieben werden

$$T_{sh}(s) = (-\frac{c}{s}+d)\Delta\omega(s)$$

oder in zeitdiskreter Notation $T_{sh}(k)-T_{sh}(k-1) = (-cTs+d)\Delta\omega(k)-d\Delta\omega(k-1)$. Durch Vergleich ergeben sich aus den Modellparameter des zweiten Teilmodells wieder die Systemparameter $a_1 = -1$, $b_1 = -(cTs + d)$ und $b_2 = -d$, woraus die gesuchten Systemparameter c, d wieder bestimmt werden können. Die Modellparameter $a_1$, $b_1$ des zweiten Teilmodells entsprechen dabei natürlich nicht den Modellparametern des ersten Teilmodells.

In gleicher Weise kann ein drittes Teilmodell für die Belastungsmaschine 3 verwendet werden, um den Systemparameter $J_D$ zu ermitteln. Die Massenträgheit $J_D$ der Belastungsmaschine kann für den Zweimassenschwinger natürlich auch aus der Resonanzfrequenz $\omega_R$, die aus der nicht-parametrischen Identifikation bekannt ist, ermittelt

$$J_D = \frac{c}{\omega_R^2 - \frac{c}{J_E}}$$

werden, beispielsweise als . Oftmals ist die Massenträgheit $J_D$ der Belastungsmaschine 3 bekannt, sodass mit der bekannten Massenträgheit auch ein Abgleich der Identifikationsgüte erfolgen kann.

Wie bereits erwähnt kann die parametrische Identifikation auch im Frequenzbereich erfolgen, beispielsweise mittels MLE. Bei MLE werden die Modellparameter $\theta$ geschätzt, die die sogenannte Likelihood-Funktion maximieren.

Dieses an sich bekannte Verfahren wird nachfolgend kurz erläutert.

MLE nutzt die Messdaten des Ausgangssignals y= $y_1$, $y_2$, ..., $y_N$ und eine zugehörige, als bekannt vorausgesetzte, Wahrscheinlichkeitsdichtefunktion $f_{ny}$ des Messrauschens am Ausgang, die durch die Modellparameter $\theta$ beschrieben wird. $f(y|\theta_0)$ beschreibt die Wahrscheinlichkeitsverteilungsfunktion der vom Zufall abhängigen Teile des Schätzproblems. Mit einem hypothetischen Modell yo = G(uo, $\theta$), das die Anregungen und die Parameter beschreibt, kann die Likelihood Funktion im Falle Messrauschen am Ausgang als $f(y|\theta,u_0) = f_{ny}(y-y_0)$ angeschrieben werden. Darin bezeichnet $u_0$ den unverrauschten Eingang. Die unbekannten Modellparameter $\theta$ können dann durch Maximieren der Likelihood Funktion f ermittelt werden: $\hat{\theta}(N) = \arg\max f(y|\theta,u_0)$.

Im Falle zusätzlichen Messrauschens am Eingang kann die Likelihood Funktion als $f(y,u | \theta,y_0,u_0) = f_{ny}(y-y_0)f_{nu}(u-u_0)$ angeschrieben werde, mit der Wahrscheinlichkeitsdichtefunktion $f_{nu}$ des Messrauschens am Eingang.

Unter der Annahme, dass das Rauschen am Eingang und am Ausgang Mittelwert Null haben, normalverteilt sind und unabhängige von den Frequenzen sind, kann eine Gauß'sche Kostenfunktion

$$V_{ML}(\theta,Z) = \sum_{k=1}^{F} \frac{\left|e(\Omega_k,\theta,Z(k))\right|^2}{\sigma_e^2(\Omega_k,\theta)}$$

(Likelihood Funktion f) angeschrieben werden. Darin ist $\theta$ der Parametervektor und Z(k) = [Y(k) U(k)] bezeichnet die vorliegenden Messdaten des Eingangs U(k) und des Ausgangs Y(k). e bezeichnet einen Fehler über alle Frequenzen $\Omega_k$ der Form $e(,\Omega,_k, \theta, Z(k)) = Y(k)-G(\Omega_k, \theta)U(k)$ und $\sigma_e$ die Kovarianz des Fehlers e in der Form $\sigma_e^2(\Omega_k,\theta) = \sigma_Y^2(k) + \left|G(\Omega_k,\theta)\right|^2 \sigma_U^2(k) - 2\,\mathrm{Re}(\overline{G}(\Omega_k)\sigma_{YU}^2(k))$ . Re bezeichnet hierbei den Realteil.

Wie zu erkennen ist, werden für die obigen Gleichungen die Varianzen und die Kovarianz des Messrauschens am Eingang $\sigma_U^2(k)$ , Ausgang $\sigma_Y^2(k)$ und Eingang-Ausgang $\sigma_{YU}^2(k)$ benötigt. Diese können vorteilhafterweise aus der nicht-parametrischen Identifikation wie oben beschrieben erhalten werden.

Nachdem das sich ergebende Optimierungsproblem der Maximierung der Kostenfunktion $V_{ML}$ (Likelihood Funktion) nichtlinear ist, wird die Optimierung beispielsweise mit der bekannten Levenberg-Marquardt Methode gelöst. Die Konvergenz der Optimalität der Optimierung hängt wesentlich von den Anfangswerten der Optimierung ab. Als Anfangswerte können Schätzwerte der gesuchten Systemparameter SP herangezogen werden oder es können andere bekannte Initialisierungsverfahren, beispielsweise aus einem Generalized Total Least Square Verfahren, angewendet werden.

Wird eine parametrische Übertragungsfunktion $G(\Omega_k,\theta) = \dfrac{B_\theta(\Omega_k)}{A_\theta(\Omega_k)}$ verwendet, kann die Kostenfunktion für MLE zu

$$V_{ML}(\theta,Z) = \frac{1}{F} \sum_{k=1}^{F} \frac{\left|A_\theta(\Omega_k)Y(k) - B_\theta(\Omega_k)Y(k)\right|^2}{\hat{\sigma}_Y^2(k)\left|A_\theta(\Omega_k)\right|^2 \hat{\sigma}_U^2(k)\left|B_\theta(\Omega_k)\right|^2 - 2\,\mathrm{Re}(\hat{\sigma}_{YU}^2(k)A_\theta(\Omega_k)\overline{B}_\theta(\Omega_k))}$$

umgeschrieben werden. Darin sind A und B wieder Polynome $A(q) = 1 + a_1 q^{-1} + ... + a_{na}q^{-na}$, $B(q) = 1 + b_1 q^{-1} + ... + b_{nb}q^{-nb}$. Die Ordnung $n_a$, $n_b$ der Polynome ergibt sich wieder aus dem mit der nicht-parametrischen Identifikation geschätzten Frequenzgang $\hat{G}(\Omega_k)$. Man erhält damit aus der Optimierung wieder die Modellparameter $\theta = [a_1 ... a_{na} b_1 ... b_{nb}]$, die wiederum aus einem Vergleich mit einem physikalischen Modell des dynamischen Systems (Prüfaufbau PA) verglichen werden, um auf die Systemparameter SP ($J_E$, c, d, $J_D$) zu kommen. In gleicher Weise können auch wieder Teilmodelle verwendet werden, um die Ermittlung der Systemparameter SP ($J_E$, c, d, $J_D$) zu vereinfachen.

Die Teilmodelle für den Verbrennungsmotor 2 und die Prüfstandwelle 4 in zeitdiskreter Notation mit der z-Transformation ergeben sich zu $\omega_E(k) = -\dfrac{\frac{Ts}{J_E}}{1-z^{-1}} T_{sh}(k)$ und $T_{sh}(s) = \dfrac{(d-Tsd)-dz^{-1}}{1-z^{-1}} \Delta\omega(k)$ , woraus sich die Systemparameter SP ($J_E$, c, d, Jo) aus den geschätzten Teilmodellen zu

$J_E = \dfrac{Ts}{b_1}$, $J_D = \dfrac{c}{\omega_R^2 - \dfrac{c}{J_E}}$ , $c = \dfrac{(b_2 + b_1)}{Ts}$ , d = $-b_s$ ergeben.

Die parametrische Identifikation liefert somit die Systemparameter SP ($J_E$, c, d, $J_D$ im Falle des Zweimasseschwingers) des angeregten dynamischen Systems (der Prüfaufbau PA wie z.B. in Fig.1 dargestellt). Mit zumindest einen Systemparameter SP, kann nun beispielsweise mit herkömmlichen Reglerentwurfsmethoden ein Regler für bestimmte Komponenten des Prüfaufbaus entworfen werden, z.B. ein Drehzahlregler für die Belastungsmaschine 3 oder ein Drehmomentenregler für den Verbrennungsmotor 2.

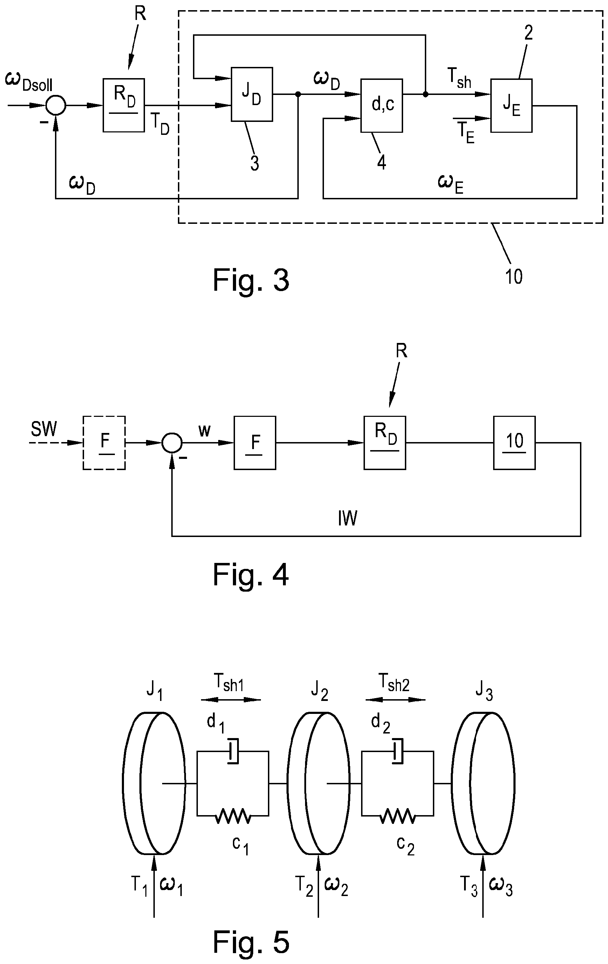

In Fig.3 ist ein beispielhafter geschlossener Regelkreis für den Prüfaufbau PA nach Fig.1 dargestellt. Die Regelstrecke 10 repräsentiert den Prüfaufbau PA mit den Massenträgheitsmomenten $J_E$ des Verbrennungsmotors 2 und $J_D$ der Belastungsmaschine 3. Die Prüfstandwelle 4 wird durch die Drehsteifigkeit c und Drehdämpfung d repräsentiert. Diese Systemparameter SP wurden durch die obige nicht-parametrische / parametrische Identifikation ermittelt. Die Belastungsmaschine 3 wird durch einen Dynoregler $R_D$ (z.B. ein PI-Regler) drehzahlgeregelt. Dazu wird eine Soll-Drehzahl $\omega_{Dsoll}$ vorgegeben. Die sich einstellende IstDrehzahl $\omega_D$ wird am Prüfstand 1 gemessen. Der Regelfehler $\omega_{Dsoll}$ - $\omega_D$ wird durch den Dynoregler $R_D$ nach dem festgelegten Reglerverhalten ausgeregelt. Die Reglerparameter zur Einstellung des gewünschten Regelverhaltens am konkreten dynamischen System können dabei mit einer hinlänglich bekannten Reglerentwurfsmethode festgelegt werden.

Die mit der nicht-parametrischen Identifikation ermittelte Resonanzfrequenz(en) $\omega_R$, die ebenfalls einen Systemparameter SP darstellen, kann auch verwendet werden, um ein Filter F zu entwerfen, dass mögliche Resonanzen am Prüfstand 1 unterbinden soll. Das Ziel des Filters F ist es eine Anregung mit Resonanzfrequenz $\omega_R$ zu unterbinden. Um das dynamische Verhalten des Prüfaufbaus PA auf einem Prüfstand 1 mit einem Filter F möglichst geringfügig zu beeinflussen, bieten sich hierfür Filter F an, die Frequenzen innerhalb eines engen Frequenzbereiches ausfiltern, beispielsweise sogenannte Kerbfilter (Notch Filter). Dazu wird das Kerbfilter so entworfen, dass Frequenzen in einem engen Frequenzbereich um die Resonanzfrequenz $\omega_R$ ausgefiltert werden. Ein solches Filter F kann vor einem Regler R für eine Komponente des Prüfaufbaus PA, beispielsweise dem Dynoregler $R_D$, zum Filtern der dem Regel R zugeführten Regelungsabweichung w (Differenz aus Sollwert SW und Istwert IW der Regelgröße) eingesetzt werden (wie in Fig.4), oder auch zum Filtern der Sollwerte SW (z.B. eine Solldrehzahl $\omega_{Dsoll}$) für den Regler R (wie in Fig.4 strichliert angedeutet).

Die identifizierten Systemparameter SP ($\omega_R$, $J_E$, c, d, $J_D$), oder zumindest einer davon, können aber auch für einen Beobachter verwendet werden, um nicht messbare Größen des Prüfaufbaus, beispielsweise ein inneres effektives Drehmoment $T_E$ des Verbrennungsmotors 2, zu schätzen.

Ebenso können die identifizierten Systemparameter SP ($\omega_R$, $J_E$, c, d, $J_D$), oder zumindest einer davon, verwendet werden, um Änderungen am Prüfaufbau PA, beispielsweise aufgrund Alterung, Beschädigung, Konfigurationsänderung, usw., festzustellen. Hierfür können die Systemparameter SP ($J_E$, c, d, $J_D$) in regelmäßigen Abständen neu ermittelt werden und die zeitliche Veränderung der Systemparameter SP ($J_E$, c, d, $J_D$) überwacht werden. Dabei kann der Prüflauf adaptiert werden oder unterbrochen werden, wenn es eine ungewöhnliche oder unerwünschte Änderung festgestellt wird.

Nicht zuletzt kann auch der Prüfaufbau PA zur Durchführung des Prüfversuchs selbst verändert werden, um den zumindest einen identifizierten Systemparameter SP zu ändern, um ein gewünschtes dynamisches Verhalten am Prüfstand 1 abzubilden. Das kann beispielsweise verwendet werden, um die Dynamik des Prüfaufbaus PA am Prüfstand 1 an die Dynamik eines Fahrzeugs anzupassen, in dem der Drehmomentenerzeuger DE des Prüfaufbaus PA eingesetzt werden soll.

In Fig.6 ist ein Prüfstand 1 mit einem Prüfaufbau PA, beispielsweise mit einem Zweimassenschwinger wie in Fig.1, angedeutet. Am Prüfaufbau PA werden mit geeigneten Messensoren MS Messwerte MW für die benötigten Eingangssignale u(t) und Ausgangssignale y(t) bei dynamischer Anregung erfasst, was natürlich auch die zeitdiskrete Erfassung der Signale u(k), y(k) umfasst. Aus den Messwerten MW werden in einer Auswerteeinheit 12 (Hardware und/oder Software) die benötigten Systemparameter SP, beispielsweise $J_E$, c, d, $J_D$, des Prüfaufbaus PA wie beschrieben ermittelt. Zumindest ein identifizierter Systemparameter SP wird in einer Prüfstandsteuereinheit 11 (Hardware und/oder Software) für die Durchführung eines Prüflaufs am Prüfstand 1 mit dem Prüfaufbau PA verwendet. Die Auswerteeinheit 12 und die Prüfstandsteuereinheit 11 können natürlich auch in einer gemeinsamen Einheit integriert sein. Die Anregung des Prüfaufbaus PA erfolgt durch die Prüfstandsteuereinheit 11. Der zumindest eine identifizierte Systemparameter SP kann am Prüfstand 1 zur Durchführung des Prüflaufs wie beschrieben verwendet werden.

Obwohl die Erfindung oben am Beispiel eines Zweimassenprüfaufbaus beschrieben wurde, ist es offensichtlich, dass die Erfindung auch auf beliebige Mehrmassenprüfaufbauten, beispielsweise im Falle eines Antriebstrangprüfstandes, bei dem der Drehmomentenerzeuger DE über eine Kombination von Wellen, Kupplungen, Wellenkupplungen und/oder Getrieben mit einer Drehmomentensenke DS verbunden ist, erweitert werden kann. Dabei ist für die Durchführung eines Prüflaufs immer ein Prüfling mit einem Drehmomentenerzeuger DE, beispielsweise ein Verbrennungsmotor 2, ein Elektromotor, aber auch eine Kombination aus Verbrennungsmotor 2 und Elektromotor, mechanisch mit einer Drehmomentensenke DS, beispielsweise einer Belastungsmaschine 3, verbunden. Die Verbindung erfolgt mit zumindest einem Koppelungselement KE, beispielsweise mit einer Prüfstandwelle 4, wie in Fig.1 für den Zweimassenprüfstand dargestellt. Die Koppelung kann aber auch mit einem Koppelungselement KE erfolgen, das verschiedene mechanische Koppelungen, die auch weitere Massenträgheiten (Mehrmassenprüfaufbau) umfassen kann, umfasst, wie beispielsweise im Falle eines Antriebstranges als Prüfling am Prüfstand 1.

In Fig.5 ist beispielsweise ein Dreimassenprüfaufbau dargestellt. Dieser enthält drei Massenträgheiten J1, J2, J3, die durch Koppelungelemente mit jeweils eine Drehsteifigkeit c1, c2 und einer Drehdämpfung d1, d2 verbunden sind. J1 ist beispielsweise ein Drehmomentenerzeuger DE, z.B. ein Verbrennungsmotor 2, und J2, J3 Drehmomentensenken DS, beispielsweise ein Drehmomentenmessflansch, ein Zweimassenschwungrad oder eine Kupplung und eine Belastungsmaschine 3. Auch eine Konfiguration mit zwei Drehmomentenerzeugern DE, ein Verbrennungsmotor 2 und ein Elektromotor, und einer Drehmomentensenke DS, einer Belastungsmaschine 3, ist natürlich denkbar. Die erfindungsgemäße Identifikation der Systemparameter SP (J1, J2, J3, c1, c2, d1, d2) kann in analoger Weise wie oben beschrieben erfolgen.

Je nachdem welche Messgrößen verfügbar sind, können beispielsweise folgende Konfigurationen abgebildet werden:

| Bekannte Parameter | Gemessene Signale (u(t), y(t)) | Identifizierte Systemparameter SP |
|---|---|---|
| - | $\omega 1$, $\omega 2$, $\omega 3$, Tsh1, Tsh2 | J1, J2, c1, c2 |
| J1, J2 | Tsh2, $\omega 2$ | c1, d1 |
| J1, J2 | Tsh2, $\omega 2$, T2 | c1, d1 |
| - | $\omega 2$, $\omega 3$, Tsh2 | c2, d2 |
| - | $\omega 1$, $\omega 2$, $\omega 3$, T2, Tsh2 | (J1 + J2), c2, d2 |
| J2 | $\omega 1$, $\omega 2$, Tsh2 | J1, c1 |

**Patentansprüche**

1. Verfahren zum Durchführen eines dynamischen Prüflaufs für einen Prüfaufbau (PA) auf einem Prüfstand (1), wobei der Prüfaufbau (PA) zumindest einen Drehmomentenerzeuger (DE) umfasst, der am Prüfstand (1) mittels zumindest eines Koppelungselements (KE) mechanisch mit zumindest einer Drehmomentensenke (DS) verbunden wird, und wobei der Drehmomentenerzeuger (DE), das Koppelungselement (KE) und die Drehmomentensenke (DS) mit das dynamische Verhalten charakterisierenden Systemparametern (SP) beschrieben werden, und der Prüfaufbau (PA) am Prüfstand (1) dynamisch angeregt wird, indem dem Prüfaufbau (PA) ein dynamisches Eingangssignal (u(t)) aufgeschaltet wird und dabei Messwerte (MW) des Eingangssignals (u(t)) des Prüfaufbaus (PA) und eines sich ergebenden Ausgangssignals (y(t)) des Prüfaufbaus (PA) erfasst werden, wobei aus dem erfassten Eingangssignal (u(t)) und Ausgangssignal (y(t)) mit einer nicht-parametrischen Identifikationsmethode ein Frequenzgang (G($\Omega_k$)) des dynamischen Verhaltens des Prüfaufbaus (PA) zwischen dem Ausgangssignal (y(t)) und dem Eingangssignal (u(t)) ermittelt wird, **dadurch gekennzeichnet, dass** aus dem Frequenzgang (G($\Omega_k$)) eine Modellstruktur, welche der Ordnung eines Zähler- und Nennerpolynoms des Frequenzganges entspricht, eines parametrischen Modells, das das Eingangssignal (u(t)) auf das Ausgangssignal (y(t)) abbildet, abgeleitet wird, dass anhand der Modellstruktur und einer parametrischen Identifikationsmethode zumindest ein Systemparameter (SP) des Prüfaufbaus (PA) ermittelt wird **und dass** der zumindest eine identifizierte Systemparameter (SP) zur Durchführung des Prüflaufs verwendet wird.

2. Verfahren nach Anspruch 1, **dadurch gekennzeichnet, dass** der zumindest eine Systemparameter (SP) für einen Entwurf eines Reglers (R, $R_D$) für zumindest eine Komponente des Prüfaufbaus (PA) verwendet wird.

3. Verfahren nach Anspruch 1, **dadurch gekennzeichnet, dass** der zumindest eine Systemparameter (SP) für einen Entwurf eines Filters (F) verwendet wird, das entweder einen Sollwert (SW) für einen Regler (R, $R_D$) für zumindest eine Komponente des Prüfaufbaus (PA) oder für eine einem Regler (R, $R_D$) für zumindest eine Komponente des Prüfaufbaus (PA) zugeführte Regelungsabweichung (w) filtert.

4. Verfahren nach Anspruch 1, **dadurch gekennzeichnet, dass** eine Änderung des zumindest einen Systemparameters (SP) über die Zeit überwacht wird.

5. Verfahren nach Anspruch 1, **dadurch gekennzeichnet, dass** der zumindest eine Systemparameter (SP) verwendet wird, um das dynamische Verhalten des Prüfaufbaus (PA) an ein gewünschtes dynamisches Verhalten anzupassen.

6. Verfahren nach einem der Ansprüche 1 bis 5, **dadurch gekennzeichnet, dass** bei der nicht-parametrischen Identifikationsmethode Messrauschen des Eingangssignals (u(t)) und/oder des Ausgangssignals (y(t)) berücksichtigt wird.

7. Verfahren nach einem der Ansprüche 1 bis 6, **dadurch gekennzeichnet, dass** als nicht-parametrische Identifikationsmethode die Methode der lokalen Polynome verwendet wird, die den Frequenzgang (G($\Omega_k$)) für alle Frequenzen lokal um eine lokale Frequenz ($\Omega_k$) durch ein Polynom annähert.

8. Verfahren nach Anspruch 7, **dadurch gekennzeichnet, dass** mit der nicht-parametrischen Identifikationsmethode zusätzlich eine Varianz $(\sigma_Y^2(k))$ des Messrauschens des Ausgangssignals (y(t)) und/oder eine Varianz $(\sigma_U^2(k))$ des Messrauschens des Eingangssignals (u(t)) und/oder eine Kovarianz $(\sigma_{YU}^2(k))$ des Rauschens zwischen Eingang und Ausgang ermittelt werden.

9. Verfahren nach einem der Ansprüche 1 bis 8, **dadurch gekennzeichnet, dass** aus dem Frequenzgang (G($\Omega_k$)) als Systemparameter (SP) eine Resonanzfrequenzen ($\omega_R$) und/oder eine Tilgungsfrequenzen ($\omega_F$) ermittelt wird.

10. Verfahren nach einem der Ansprüche 1 bis 9, **dadurch gekennzeichnet, dass** eine parametrische Identifikationsmethode im Zeitbereich, vorzugsweise eine Prediction Error Method (PEM), oder im Frequenzbereich, vorzugsweise eine Maximum Likelihood Estimator Method, verwendet wird.

11. Verfahren nach einem der Ansprüche 1 bis 10, **dadurch gekennzeichnet, dass** mit der parametrischen Identifikationsmethode Modellparameter ($\theta$) des parametrischen Modells ermittelt werden und durch Vergleich des parametrischen Modells mit einem physikalischen Systemmodell mit dem zumindest einen Systemparameter (SP), der zumindest eine Systemparameter (SP) aus den Modellparametern ($\theta$) ermittelt wird.

12. Verfahren nach einem der Ansprüche 1 bis 10, **dadurch gekennzeichnet, dass** das parametrische Modell in Teilmodelle mit jeweils Modellparametern ($\theta$) zerlegt wird und durch Vergleich zumindest eines Teilmodells mit einem physikalischen Teilmodell mit dem zumindest einen Systemparameter (SP), der zumindest eine Systemparameter (SP) aus den Modellparametern ($\theta$) des Teilmodells ermittelt wird.

13. Prüfstand zum Durchführen eines dynamischen Prüflaufs für einen Prüfaufbau (PA) mit zumindest einen Drehmomentenerzeuger (DE), der mittels zumindest eines Koppelungselements (KE) mechanisch mit zumindest einer Drehmomentensenke (DS) verbunden ist, und wobei der Drehmomentenerzeuger (DE), das Koppelungselement (KE) und die Drehmomentensenke (DS) mit das dynamische Verhalten charakterisierenden Systemparametern (SP) beschrieben ist, und am Prüfstand (1) eine Prüfstandsteuereinheit (11) vorgesehen ist, die den Prüfaufbau (PA) am Prüfstand (1) durch Vorgabe eines Eingangssignals für den Prüfaufbau (PA) dynamisch anregt, und am Prüfstand (1) Messsensoren (MS) vorgesehen sind, die Messwerte (MW) des Eingangssignals (u(t)) und eines sich ergebenden Ausgangssignals (y(t)) des Prüfaufbaus (PA) erfassen, wobei eine Auswerteeinheit (12) vorgesehen ist, die aus dem erfassten Eingangssignal (u(t)) und Ausgangssignal (y(t)) mit einer nicht-parametrischen Identifikationsmethode einen Frequenzgang (G($\Omega_k$)) des dynamischen Verhaltens des Prüfaufbaus (PA) zwischen dem Ausgangssignal (y(t)) und dem Eingangssignal (u(t)) ermittelt, **dadurch gekennzeichnet, dass** die Auswerteeinheit (12) aus dem Frequenzgang (G($\Omega_k$)) eine Modellstruktur, welche der Ordnung eines Zähler- und Nennerpolynoms des Frequenzganges entspricht, eines parametrischen Modells, das das Eingangssignal (u(t)) auf das Ausgangssignal (y(t)) abbildet, ableitet und anhand der Modellstruktur und einer parametrischen Identifikationsmethode zumindest einen Systemparameter (SP) des Prüfaufbaus (PA) ermittelt **und dass** die Prüfstandsteuereinheit (11) den zumindest einen identifizierten Systemparameter (SP) zur Durchführung des Prüflaufs verwendet.

**Claims**

1. Method for carrying out a dynamic test run for a test setup (PA) on a test bench (1), the test setup (PA) comprising at least one torque generator (DE), which is mechanically coupled on the test bench (1) with at least one torque sink (DS) by means of at least one coupling element (KE), and wherein the torque generator (DE), the coupling element (KE), and the torque sink (DS) are described with system parameters characterizing the dynamic response (SP), and the test setup (PA) is dynamically excited on the test bench (1) by virtue of a dynamic input signal (u(t)) being applied to the test setup (PA) and, in the process, measured values (MW) of the input signal (u(t)) of the test setup (PA) and of a resultant output signal (y(t)) of the test setup (PA) are recorded, wherein a frequency response $(G(\Omega_k))$ of the dynamic response of the test setup (PA) between the output signal (y(t)) and the input signal (u(t)) is determined from the recorded input signal (u(t)) and output signal (y(t)) using a nonparametric identification method, **characterized in that** a model structure, which corresponds to the order of a numerator and denominator polynomial of the frequency response $(G(\Omega_k))$, of a parametric model that maps the input signal (u(t)) onto the output signal (y(t)) is derived from the frequency response $(G(\Omega_k))$, **that** the model structure and a parametric identification method are used to determine at least one system parameter (SP) of the test setup (PA), **and that** the at least one identified system parameter (SP) is used to perform the test run.

2.  Method according to claim 1, **characterized in that** the at least one system parameter (SP) is used for designing a controller $(R, R_D)$ for at least one component of the test setup (PA).

3.  Method according to claim 1, **characterized in that** the at least one system parameter (SP) is used for designing a filter (F) that either filters a setpoint (SW) for a controller $(R, R_D)$ for at least one component of the test setup (PA) or a control deviation (w) fed to a controller $(R, R_D)$ for at least one component of the test setup (PA).

4.  Method according to claim 1, **characterized in that** a change in the at least one system parameter (SP) is monitored over time.

5.  Method according to claim 1, **characterized in that** the at least one system parameter (SP) is used to adapt the dynamic response of the test setup (PA) to a desired dynamic response.

6.  Method according to any of claims 1 to 5, **characterized in that** measurement noise of the input signal (u(t)) and/or of the output signal (y(t)) is taken into account in the nonparametric identification method.

7.  Method according to any of the claims 1 to 6, **characterized in that** the method of local polynomials is used as the nonparametric identification method which locally approximates the frequency response $(G(\Omega_k))$ for all frequencies around a local frequency $(\Omega_k)$ via a polynomial.

8.  Method according to claim 7, **characterized in that** a variance $\left(\sigma_Y^2(k)\right)$ of the measurement noise of the output signal (y(t)) and/or a variance $\left(\sigma_U^2(k)\right)$ of the measurement noise of the input signal (u(t)) and/or a covariance $\left(\sigma_{YU}^2(k)\right)$ of the noise between input and output is additionally determined with the nonparametric identification method.

9.  Method according to any of claims 1 to 8, **characterized in that** from the frequency response $(G(\Omega_k))$ a resonance frequencies $(\omega_R)$ and/or an eradication frequencies $(\omega_F)$ is determined as system parameter (SP).

10. Method according to any of claims 1 to 9, **characterized in that** a parametric identification method in the time domain, preferably a prediction error method (PEM), or in the frequency domain, preferably a maximum likelihood estimator method, is used.

11. Method according to any of claims 1 to 10, **characterized in that** model parameters $(\theta)$ of the parametric model are determined with the parametric identification method and by comparing the parametric model with a physical system model with the at least one system parameter (SP), the at least one system parameter (SP) is determined from the model parameters $(\theta)$.

12. Method according to any of claims 1 to 10, **characterized in that** the parametric model is divided into sub-models with respective model parameters $(\theta)$ and by comparing at least one sub-model with a physical sub-model with the at least one system parameter (SP), the at least one system parameter (SP) is determined from the model parameters $(\theta)$ of the sub-model.

13. Test bench for carrying out a dynamic test run for a test setup (PA) comprising at least one torque generator (DE), which is mechanically coupled to at least one torque sink (DS) by means of at least one coupling element (KE), and wherein the torque generator (DE), the coupling element (KE), and the torque sink (DS) are described with system parameters characterizing the dynamic response (SP), and a test bench control unit (11) is provided on the test bench (1), which dynamically excites the test setup (PA) on the test bench (1) by specifying an input signal for the test setup (PA), and measuring sensors (MS) are provided on the test bench (1) that record measured values (MW) of the input signal (u(t)) and of a resultant output signal (y(t)) of the test setup (PA), wherein an evaluation unit (12) is provided which determines a frequency response (G($\Omega_k$)) of the dynamic response of the test setup (PA) between the output signal (y(t)) and the input signal (u(t)) from the recorded input signal (u(t)) and output signal (y(t)) using a nonparametric identification method, **characterized in that** the evaluation unit (12) derives a model structure, which corresponds to the order of a numerator and denominator polynomial of the frequency response (G($\Omega_k$)), of a parametric model that maps the input signal (u(t)) onto the output signal (y(t)) from the frequency response (G($\Omega_k$)), and which determines at least one system parameter (SP) based on the model structure and a parametric identification method of the test setup (PA), **and that** the test bench control unit (11) uses the at least one identified system parameter (SP) to perform the test run.

**Revendications**

1. Procédé de réalisation d'un cycle d'essai dynamique pour un appareillage d'essai (PA) sur un banc d'essai (1), l'appareillage d'essai (PA) comprenant au moins un générateur de couple (DE), lequel est connecté mécaniquement au moyen d'au moins un élément de couplage (KE) à au moins un puits de couple (DS) sur le banc d'essai (1), et le générateur de couple (DE), l'élément de couplage (KE) et le puits de couple (DS) étant décrits avec des paramètres de système (SP) caractérisant le comportement dynamique, et l'appareillage d'essai (PA) étant excité dynamiquement sur le banc d'essai (1) en branchant sur l'appareillage d'essai (PA) un signal d'entrée dynamique (u(t)) et en détectant ce faisant des valeurs de mesure (MW) du signal d'entrée (u(t)) de l'appareillage d'essai (PA) et d'un signal de sortie (y(t)) de l'appareillage d'essai (PA) en résultant, une réponse en fréquence (G($\Omega_k$)) du comportement dynamique de l'appareillage d'essai (PA) entre le signal de sortie (y(t)) et le signal d'entrée (u(t)) étant déterminé au moyen d'une méthode d'identification non paramétrique à partir du signal d'entrée (u(t)) et du signal de sortie (y(t)) détectés, **caractérisé en ce qu'**une structure de modèle, laquelle correspond à l'ordre d'un polynôme numérateur et dénominateur de la réponse en fréquence, d'un modèle paramétrique qui reproduit le signal d'entrée (u(t)) sur le signal de sortie (y(t)), est dérivée à partir de la réponse en fréquence (G($\Omega_k$)) **en ce qu'**au moins un paramètre de système (SP) de l'appareillage d'essai (PA) est déterminé au moyen de la structure de modèle et d'une méthode d'identification paramétrique **et en ce que** l'au moins un paramètre de système (SP) identifié est utilisé pour la réalisation du cycle d'essai.

2. Procédé selon la revendication 1, **caractérisé en ce que** l'au moins un paramètre de système (SP) est utilisé pour une conception d'un régulateur (R, $R_D$) pour au moins un composant de l'appareillage d'essai (PA).

3. Procédé selon la revendication 1, **caractérisé en ce que** l'au moins un paramètre de système (SP) est utilisé pour une conception d'un filtre (F), lequel filtre une valeur de consigne (SW) pour un régulateur (R, $R_D$) pour au moins un composant de l'appareillage d'essai (PA) ou pour un écart de régulation (w) appliqué à un régulateur (R, $R_D$) pour au moins un composant de l'appareillage d'essai (PA).

4. Procédé selon la revendication 1, **caractérisé en ce qu'**une modification de l'au moins un paramètre de système (SP) est surveillée dans le temps.

5. Procédé selon la revendication 1, **caractérisé en ce que** l'au moins un paramètre de système (SP) est utilisé pour ajuster le comportement dynamique de l'appareillage d'essai (PA) à un comportement dynamique souhaité.

6. Procédé selon l'une quelconque des revendications 1 à 5, **caractérisé en ce qu'**un bruit de mesure du signal d'entrée (u(t)) et/ou du signal de sortie (y(t)) est pris en compte dans la méthode d'identification non paramétrique.

7. Procédé selon l'une quelconque des revendications 1 à 6, **caractérisé en ce que** la méthode des polynômes locaux, qui approche la réponse en fréquence (G($\Omega_k$)) pour toutes les fréquences localement autour d'une fréquence locale ($\Omega_k$) par un polynôme, est utilisée comme méthode d'identification non paramétrique.

8. Procédé selon la revendication 7, **caractérisé en ce qu'**une

variance ($\sigma^2_y(k)$) du bruit de mesure du signal de sortie (y(t)) et/ou une
variance ($\sigma^2_U(k)$) du bruit de mesure du signal d'entrée (u(t)) et/ou une

covariance ($\sigma^2_{YU}(k)$) du bruit entre l'entrée et la sortie sont déterminés en plus au moyen de la méthode d'identification non paramétrique.

9. Procédé selon l'une quelconque des revendications 1 à 8,
   **caractérisé en ce qu'**une fréquence de résonance ($\omega_R$) et/ou une fréquence d'absorption ($\omega_F$) sont déterminées en tant que paramètres de système (SP) à partir de la réponse de fréquence ($G(\Omega_k)$).

10. Procédé selon l'une quelconque des revendications 1 à 9,
    **caractérisé en ce qu'**une méthode d'identification paramétrique est utilisée dans une plage de temps, de préférence une méthode d'erreur de prédiction (Prédiction Error Method, PEM), ou dans une plage de fréquence, de préférence une méthode d'estimateur de probabilité maximale (Maximum Likelihood Estimator Method).

11. Procédé selon l'une quelconque des revendications 1 à 10,
    **caractérisé en ce que** des paramètres de modèle ($\theta$) du modèle paramétrique sont déterminés avec la méthode d'identification paramétrique et l'au moins un paramètre de système (SP) est déterminé à partir des paramètres de modèle ($\theta$) par la comparaison du modèle paramétrique avec un modèle de système physique comportant l'au moins un paramètre de système (SP).

12. Procédé selon l'une quelconque des revendications 1 à 10,
    **caractérisé en ce que** le modèle paramétrique est fractionné en modèles partiels comportant respectivement des paramètres de modèle ($\theta$) et l'au moins un paramètre de système (SP) est déterminé à partir des paramètres de modèle ($\theta$) du modèle partiel par la comparaison d'au moins un modèle partiel avec un modèle partiel physique comportant l'au moins un paramètre de système (SP).

13. Banc d'essai pour la réalisation d'un cycle d'essai dynamique pour un appareillage d'essai (PA) comportant au moins un générateur de couple (DE), lequel est connecté mécaniquement au moyen d'au moins un élément de couplage (KE) à au moins un puits de couple (DS), et le générateur de couple (DE), l'élément de couplage (KE) et le puits de couple (DS) étant décrits avec des paramètres de système (SP) caractérisant le comportement dynamique, et une unité de commande de banc d'essai (11) étant prévue sur le banc d'essai (1), laquelle excite dynamiquement l'appareillage d'essai (PA) sur le banc d'essai (1) par la définition d'un signal d'entrée pour l'appareillage d'essai (PA), et des capteurs de mesure (MS) étant prévus sur le banc d'essai (1), lesquels détectent les valeurs de mesure (MW) du signal d'entrée (u(t)) et d'un signal de sortie (y(t)) de l'appareillage d'essai (PA) en résultant, une unité d'évaluation (12) étant prévue, laquelle détermine une réponse en fréquence ($G(\Omega_k)$) du comportement dynamique de l'appareillage d'essai (PA) entre le signal de sortie (y(t)) et le signal d'entrée (u(t)) au moyen d'une méthode d'identification non paramétrique à partir du signal d'entrée (u(t)) et du signal de sortie (y(t)) détectés, **caractérisé en ce que** l'unité d'évaluation (12) dérive de la réponse en fréquence ($G(\Omega_k)$) une structure de modèle, laquelle correspond à l'ordre d'un polynôme numérateur et dénominateur de la réponse en fréquence, d'un modèle paramétrique qui reproduit le signal d'entrée (u(t)) sur le signal de sortie (y(t)), et détermine au moyen de la structure de modèle et d'une méthode d'identification paramétrique au moins un paramètre de système (SP) de l'appareillage d'essai (PA) **et en ce que** l'unité de commande de banc d'essai (11) utilise l'au moins un paramètre de système (SP) identifié pour la réalisation du cycle d'essai.

Fig. 1

Fig. 6

Fig. 2a

Fig. 2b

EP 3 732 458 B1

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006025878 A1
- US 20190017894 A1, Matthews C.
- JP 2006300683 A

**In der Beschreibung aufgeführte Nicht-Patentliteratur**

- **L. LJUNG.** System Identification: Theory for the User. Prentice Hall PTR, 1999
- **THOMAS KUTTNER.** Praxiswissen Schwingungs-messtechnik. Springer Vieweg, 2015, 325-335
- **R. PINTELON et al.** Estimation of non-paramteric noise and FRF models for multivariable systems - Part I: Theory. *Mechanical Systems and Signal Processing,* 2010, vol. 24 (3), 573-595
- **L. LJUNG.** System Identification: Theory for the User. *2nd Edition Prentice Hall PTR,* 1999